# EUROPÄISCHE PATENTANMELDUNG

(11) **EP 1 095 754 A1**
(43) Veröffentlichungstag der Anmeldung: **02.05.2001**
(21) Anmeldenummer: 00121398.2
(22) Anmeldetag: 13.10.2000
(51) Int. Cl.: B29C 47/04

(54) **Kunststoffprofil**

(30) Priorität: 28.10.1999 DE 19952025
(71) Anmelder: gabo Systemtechnik GmbH, 94559 Niederwinkling (DE)
(72) Erfinder: Bauer, Peter, 94357 Konzell (DE); Lederer, Roland, 93049 Regensburg (DE); Wöhrl, Helmut, 94327 Bogen (DE); Helf, Walter, 94315 Straubing (DE)

(57) **Zusammenfassung**

Die Erfindung bezieht sich auf ein Kunststoffprofil (P), beispielsweise ein Rohr oder dergl. aus einem Basiswerkstoff (1) mit einer Hülle (2) ggf. aus einem anderen, zumindest andersfarbigen Werkstoff, wobei die Hülle mindestens einen axial verlaufenden Spalt (3) besitzt durch den der Basiswerkstoff geführt ist und die Herstellung eines solchen Kunststoffprofils mittels Coextrusion der Werkstoffe erfolgt.

## Beschreibung

Die Erfindung bezieht sich auf Kunststoffprofile gemäß dem Oberbegriff des Anspruches 1.

Solche Kunststoffprofile, insbesondere Kunststoffrohre sind an sich notorisch bekannt. Um beispielsweise eine farbige Hülle und einen/oder axial verlaufenden Markierungsstreifen auf der Profil- bzw. Rohroberfläche anzubringen, wird, abgesehen von dem Aufkleben eines Streifens, Aufbringen der Markierungsstreifen etc. mittels Farbe auf die Profiloberfläche etc., eine Technologie angewandt, die außer einem Extruder für das Basismaterial, zwei weitere Coextruder für eine Umhüllung des Profiles und den Markierungsstreifen einsetzt. Die Gründe für eine Umhüllung des Profiles und die Anbringung eines Markierungsstreifens etc. können mannigfacher Natur sein, beispielsweise können dafür notwendige Unterscheidungsmerkmale ausschlaggebend sein oder der Einsatz unterschiedlicher Werkstoffqualitäten für das Profil selbst und für die Umhüllung.

Solche Verfahren sind einerseits (Klebestreifen) nicht sehr haltbar und andererseits wegen der erforderlichen drei Extruder (ein Extruder und zwei Coextruder) aufwendig und teuer.

Der Erfindung, wie sie in den Ansprüchen beschrieben ist, liegt daher die Aufgabe zugrunde, Profile zu besitzen, die Anbringung axial verlaufender Streifen, Vertiefungen und Erhebungen einfach und kostengünstig zu gestalten.

Der mit der Erfindung erzielte Vorteil liegt nicht nur in der Möglichkeit auf einfache Weise beliebig viele derartiger Streifen usw. beispielsweise auch Markierungsstreifen in, an oder auf dem Profil oder dergl. anzubringen, sondern insbesondere in der Einsparung eines Coextruders, da nur noch ein Coextruder statt bisher zwei benötigt werden und schließlich in der Gestaltung beliebiger Übergänge vom Rohr- bzw. der Hülle d.h. dem Profilmantel zu den Streifen, Vertiefungen und Erhebungen, von glatt bis eben und profiliert, sowie in der Möglichkeit unterschiedlichste Werkstoffe und Werkstoffkombinationen, wie beispielsweise PE, PVC, RUR-Schaum oder dergl., Pasten einzusetzen. Außerdem können unterschiedliche Farben und Oberflächenstrukturen verwendet werden.

Die Erfindung ist nachstehend anhand eines in den Abbildungen dargestellten Ausführungsbeispieles näher erläutert: Es zeigt:
- Fig. 1: ein Hohlprofil in perspektivischer Darstellung und
- Fig. 2: eine Ausführungsvariante der Fig. 1 mit mehreren Rohrprofilen
- Fig. 3: eine Ausführungsvariante der Fig. 2 und
- Fig. 4: eine weitere Ausführungsvariante der Fig.2

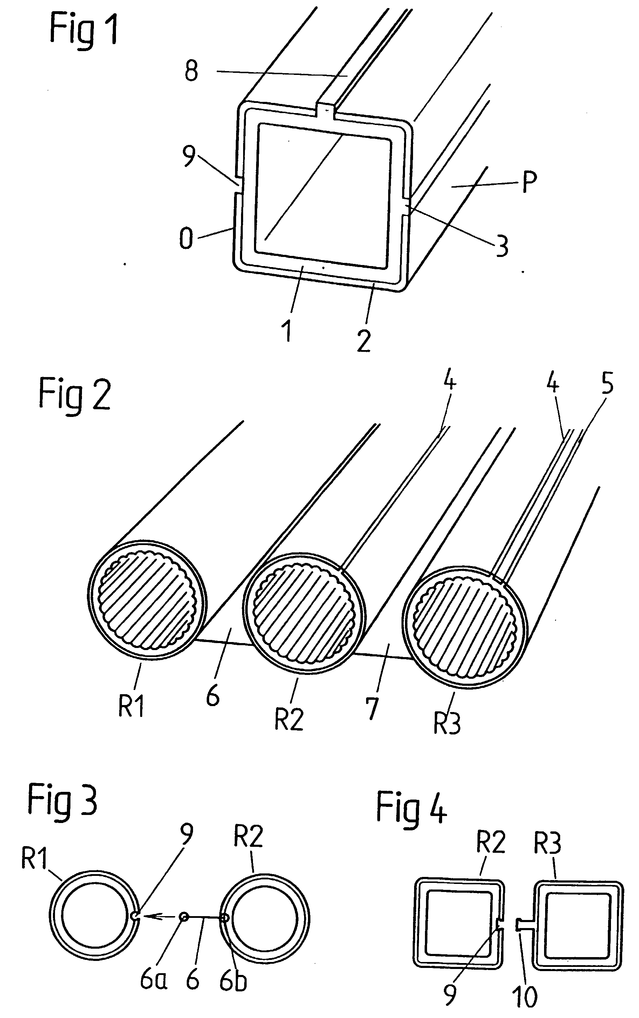

Das in Figur 1 dargestellte Profil P, z.B. ein Vierkant-Hohlprofil aus Thermoplasten wie PE, besteht aus einem inneren Kern 1 und einer äußeren Hülle oder Mantel 2, die beide aus unterschiedlichen Werkstoffen, die beispielsweise zusätzlich auch noch unterschiedlich eingefärbt sind, bestehen können. Die Hülle 2 ist nicht völlig geschlossen, vielmehr ist dieselbe mit mindestens einem Spalt 3 ausgebildet. Der auf der Oberfläche O des Profiles P sichtbare Streifen 4, beispielsweise ein Markierungsstreifen, ist aus dem Werkstoff des Kernes 1 in einem Arbeitsgang ausgeformt und durchdringt einen an dessen Ort vorgesehenen Spalt 3 in der Hülle 2.
Der Streifen 4 schließt beispielsweise mit der Oberfläche der Hülle 2 nahtlos ab, er kann aber auch als ein längliches über die Oberfläche O der Hülle 2 überstehendes Profil 8 oder als eine Lehnsgut 9, wie in Figur 3 dargestellt, oder dergl. ausgebildet sein.

Die Figur 2 zeigt einen aus drei Kabelschutzrohren R1, R2, R3 bestehenden Rohrverbund, wovon das Kabelschutzrohr R1 ohne, das Kabelschutzrohr R2 mit einem Markierungsstreifen 4 und das Kabelschutzrohr R3 mit zwei Markierungsstreifen 4 und 5 versehen ist. Mit 6 und 7 sind Verbindungsstege zwischen den beiden äußeren R1/R3 und dem inneren Kabelschutzrohr R2 bezeichnet.

Aus der Figur 3 ist ersichtlich, daß diese Verbindungsstege 6,7 an die Kabelschutzrohre R1,R2,R3 anextrudiert sein, oder mittels angeformter Wülste 6a,6b in die Längsnuten 9 eingeklipst werden können. Die einzelnen Profile P oder Kabelschutzrohre R1,R2,R3 beispielsweise können, wie in Figur 4 dargestellt, auch mittels einer in einem Profil vorgesehener Nut 9 und einer aus einem anderen Profil ragender Feder 10 mit oder ohne Verbindungsstege 6,7 miteinander verbunden sein.

Mit der Erfindung ist somit eine vielseitig einsetzbare Möglichkeit gegeben, Markierungen, Verbindungen usw. mit Vorteil auf einfache Art und Weise bei Bedarf mittels eines manipulierbaren Werkzeuges zu erzeugen und einzusetzen.

### Bezugszeichenliste

- O: Oberfläche
- P: Profil
- R1 - R3: Kabelschutzrohre
- 1: innerer Kern von P
- 2: Hülle von 1
- 3: Spalt
- 4: Markierungsstreifen
- 5: Markierungsstreifen
- 6: Verbindungssteg
- 6a: Wulst
- 6b: Wulst
- 7: Verbindungssteg
- 8: Längsprofil
- 9: Längsnut
- 10: Feder

## Patentansprüche

1. Kunststoffprofil (P), beispielsweise Kunststoffrohr (1) oder dergl. aus einem Basiswerkstoff mit einer Hülle (2) ggf. aus einem anderen, zumindest andersfarbigen Werkstoff, wobei die Herstellung des Kunststoffprofils (P) mittels Coextrusion erfolgt, **dadurch gekennzeichnet, daß** das Extrudat eines Basiswerkstoffes für den Profilkörper (1) durch mindestens einen definierten Spalt (3) seiner coextrudierten Hülle (2) aus Kunststoff-Deckmaterial geführt ist.

2. Kunststoffprofil nach Anspruch 1, **gekennzeichnet durch** unterschiedliche Farben und/oder Oberflachenstrukturen der beiden Werkstoffe.

3. Kunststoffprofil nach Anspruch 1 und 2, **dadurch gekennzeichnet**, **daß** der Basiswerkstoff für den Profilkörper (1) den Spalt (3) nur zum Teil ausfüllt, oder vollständig ausfüllt und mit deren Oberfläche (O) abschließt, oder den Spalt (3) vollständig ausfüllt und die Oberfläche der Hülle (2) als Längsprofil (8) überragt.

4. Kunststoffprofil nach Anspruch 1 bis 3, **gekennzeichnet durch** eine Gleitoberfläche der Hülle (2).

5. Kunststoffprofil nach Anspruch 1 bis 4, **dadurch gekennzeichnet**, **daß** der Basiswerkstoff für den Profilkörper als Markierungsstreifen (4) den Spalt (3) ausfüllt und auf der Oberfläche (O) der Hülle (2) sichtbar ist.

6. Kunststoffprofil nach Anspruch 1 bis 4, **dadurch gekennzeichnet**, **daß** das Kunststoffprofil (P) am Ort des/der Spalte (3) als Nut (9) oder Feder (10) ausgebildet ist.
